# EUROPÄISCHE PATENTSCHRIFT

(11) **EP 1 386 706 B1**
(45) Veröffentlichungstag und Bekanntmachung des Hinweises auf die Patenterteilung: **14.11.2007**
(21) Anmeldenummer: 03102248.6
(22) Anmeldetag: 22.07.2003
(51) Int. Cl.: B28D 7/02, B23Q 11/10, B23Q 11/00

(54) **Spülflüssigkeitsaufbereitungsgerät**
Installation for cleaning rinsing liquids
Installation d'épuration de liquide de rinçage

(30) Priorität: 29.07.2002 DE 10234407
(43) Veröffentlichungstag der Anmeldung: 04.02.2004
(73) Patentinhaber: HILTI Aktiengesellschaft, 9494 Schaan (LI)
(72) Erfinder: Streicher, Harald, 86932, Pürgen-Stoffen (DE); Wenzl, Franz, 86159, Augsburg (DE); Ostermeier, Peter, 86911, Diessen (DE)
(74) Vertreter: Wildi, Roland

(56) Entgegenhaltungen:
- EP-A- 0 941 828
- EP-A- 1 193 026
- DE-A- 19 703 911
- DE-U- 20 110 223

## Beschreibung

Die Erfindung bezeichnet ein Spülflüssigkeitsaufbereitungsgerät gemäß dem Oberbegriff des Anspruchs 1 zur Reinigung einer Spülflüssigkeit, welche in einem im Wesentlichen geschlossenen Kreislauf ein Steinbearbeitungswerkzeugspült. Ein solches Gerät ist dem Dokument DE 201 10 223 U zu entnehmen.

Insbesondere beim Diamantkernbohren oder Diamantsägen von Beton werden grosse Mengen Spülwasser benötigt, welche die Bohrkrone bzw. das Sägeblatt kühlen und den Betonschlamm abtransportieren.

Nach der DE19703911 weist eine Bohrkrone einen Absauggring mit einem Anschluss für einen handelsüblichen Nass/Trockensauger auf. Ein im Wesentlichen geschlossener Kreislauf für die Spülflüssigkeit wird nicht ausgebildet, wodurch ein Wassernetz lokal verfügbar sein muss. Zudem ist auf Grund des Wasserverbrauchs diese Lösung nur für kleinere, gelegentliche Bohrungen wirtschaftlich vertretbar.

Nach der DE3545328 weist ein im geschlossenen Kreislauf der Spülflüssigkeit mit einer Steinbearbeitungswerkzeug angeordnetes Spülflüssigkeitsaufbereitungsgerät in Strömungsrichtung eine Zuleitung, eine Absetzeinheit, eine Filtereinheit, eine Pumpe und eine Ableitung auf. Ein derartiges, als einheitliches Ganzes ausgeführtes, Spülflüssigkeitsaufbereitungsgerät ist relativ grossräumig und schwer, wodurch es im Bauhaupt- und -nebengewerbe relativ umständlich zu transportieren ist.

Die DE20110223U zeigt ein Spülflüssigkeitsaufbereitungsgerät für eine Spülflüssigkeit mit einer Zuleitung, die eine Absetzeinheit mit einem Steinbearbeitungswerkzeug verbindet, eine Ableitung, die den Strömungskreis schliesst, sowie ein saugendes Fördermittel, eine Pumpeinheit und eine Filtereinheit.

Die DE29701486U zeigt ein Saugerflanschadaptermodul mit Nebenlufteingängen, wodurch ein unidirektionaler Strömungsbypass ausgebildet wird und der Staubsauger eine höhere Saugleistung als ohne Strömungsbypass aufweist. Die Nebenlufteingänge sind als kurze Schlauchstücke ausgebildet, wodurch ein hinreichender Strömungswiderstand realisiert wird. Ein geschlossener Strömungskreis, bidirektional zu und von einem Staubsauger ist mit den kurzen Schlauchstücken nicht realisierbar.

Die Aufgabe der Erfindung besteht in einer möglichst einfachen Realisierung eines Spülflüssigkeitsaufbereitungsgerätes für einen im Wesentlichen geschlossenen Kreislauf eines Steinbearbeitungswerkzeuges. Ein weiterer Aspekt besteht in der Verringerung des Gewichts.

Die Aufgabe wird durch die Merkmale des unabhängigen Anspruchs 1 gelöst. Vorteilhafte Weiterbildungen ergeben sich aus den Unteransprüchen.

Im Wesentlichen weist ein im geschlossenen Kreislauf einer Spülflüssigkeit mit einer Steinbearbeitungswerkzeug verwendbares Spülflüssigkeitsaufbereitungsgerät im Strömungskreis eine Zuleitung, eine Absetzeinheit, ein Fördermittel und eine Ableitung auf, wobei die Absetzeinheit im Inneren eines handelsüblichen Nasssaugers ausgebildet ist.

Indem die Absetzeinheit im Inneren eines handelsüblichen Nasssaugers ausgebildet ist und dessen druckdichten Flüssigkeitssammelbehälter sowie die Saugeinheit benutzt, ist das Spülflüssigkeitsaufbereitungsgerät modular aus diesem im Bauhaupt- und -nebengewerbe üblichen Nasssauger und einem Erweiterungsmodul zusammensetzbar. Beide nunmehr kleinere und leichtere Module sind einfacher zu transportieren.

Im Wesentlichen weist ein Adaptermodul, zur Erweiterung eines handelsüblichen Nasssaugers um ein Erweiterungsmodul zu einem, im Strömungskreis eine Zuleitung, eine Absetzeinheit, ein Fördermittel und eine Ableitung aufweisenden Spülflüssigkeitsaufbereitungsgerät, eine für die Saugöffnung des Nasssaugers druckdicht passend ausgebildete äussere Dichtfläche und eine bidirektionale Durchführung für den Strömungskreis zu und von der Absetzeinheit auf.

Durch die bidirektionale Durchführung für den Strömungskreis zu und von der Absetzeinheit ist diese im Inneren eines handelsüblichen Nasssaugers ausbildbar, wodurch die Umrüstung des Nasssaugers durch einfaches Einführen des Adaptermoduls in die Saugöffnung des Nasssaugers erfolgt.

Vorteilhaft ist das Adaptermodul saugeranschlussseitig am Ende der Zuleitung mit einem, weiter vorteilhaft rohrförmigen, Absetzmittel verbunden, wodurch die durch Sediment verunreinigte Spülflüssigkeit beruhigt sowie unterhalb der Flüssigkeitsoberfläche aus der Zuleitung hinaustritt.

Vorteilhaft ist das Adaptermodul saugeranschlussseitig am Ende der Ableitung mit einem, weiter vorteilhaft schwimmenden, Absaugmittel verbunden, wodurch von sich am Boden absetzenden Sediment befreite, grob gereinigte Spülflüssigkeit nahe der Flüssigkeitsoberfläche in die Ableitung gelangt.

Vorteilhaft weist das Adaptermodul im abgedichtenden Querschnitt verlaufende, zwei voneinander druckdicht getrennte Durchführungen auf, wodurch die Zuleitung und die Ableitung einfach getrennt nebeneinander durch einfache Schläuche ausführbar sind.

Vorteilhaft ist das Adaptermodul schlauchanschlussseitig über die, weiter vorteilhaft als biegsamer Druckschlauch ausgebildete, Ableitung mit dem Erweiterungsmodul, wodurch beide Module begrenzt flexibel zueinander plaziert werden können.

Vorteilhaft ist das Adaptermodul schlauchanschlussseitig über die, weiter vorteilhaft als biegsamer Druckschlauch ausgebildete, Zuleitung direkt mit dem Auffangmittel des Steinbearbeitungswerkzeugs wie einem Absaugring verbindbar, wodurch kein unnötiger Druckabfall in der Zuleitung entsteht und sich kein Sediment ablagert.

Vorteilhaft weist das Erweiterungsmodul in der Ableitung eine Pumpeinheit auf, wodurch die Strömung der Spülflüssigkeit zur Steinbearbeitungswerkzeug aktiv unterstützbar ist.

Vorteilhaft weist das Erweiterungsmodul in der Ableitung eine Filtereinheit auf, wodurch die Spülflüssigkeit von feinen Schwebeteilchen reinigbar ist, welche die Steinbearbeitungswerkzeug verstopfen könnten.

Vorteilhaft weist das Erweiterungsmodul in der Ableitung eine Kühleinheit auf, wodurch die im Strömungskreis durch die Steinbearbeitungswerkzeug erwärmte Spülflüssigkeit aktiv abkühlbar ist.

Die Erfindung wird bezüglich eines vorteilhaften Ausführungsbeispiels näher erläutert mit:
- Fig. 1: als Spülflüssigkeitsaufbereitungsgerät
- Fig. 2: als Adaptermodul

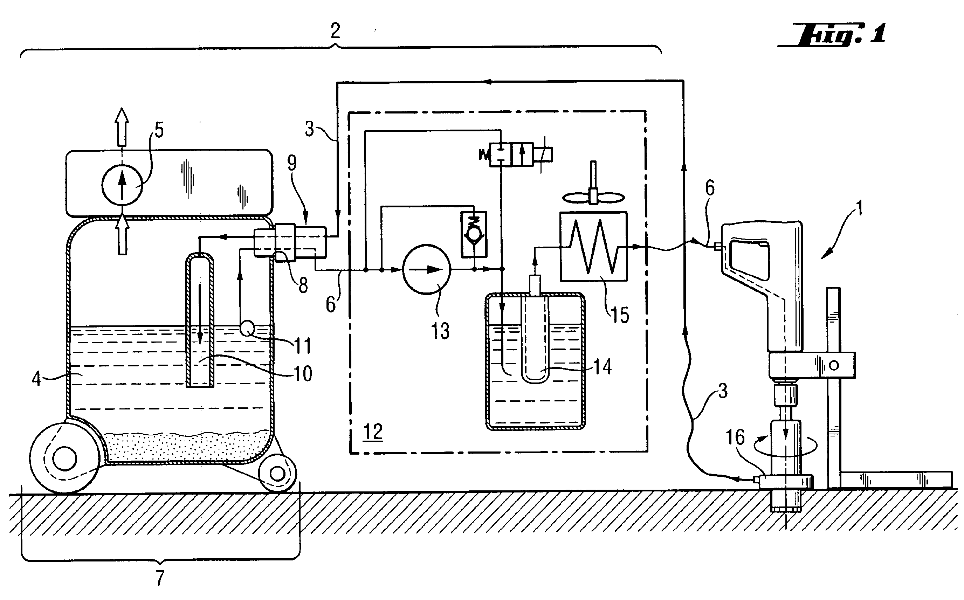

Nach Fig. 1 weist ein im geschlossenen Kreislauf einer Spülflüssigkeit mit einem Steinbearbeitungswerkzeug 1 angeordnetes Spülflüssigkeitsaufbereitungsgerät 2 im Strömungskreis eine als biegsamer Druckschlauch ausgebildete Zuleitung 3, eine Absetzeinheit 4, ein Fördermittel 5 und eine als biegsamer Druckschlauch ausgebildete Ableitung 6 auf. Die Absetzeinheit 4 ist im Inneren eines handelsüblichen Nasssaugers 7 ausgebildet, indem der Strömungskreis bidirektional durch die Saugöffnung 8 des Nasssaugers 7 verläuft, in welche ein Adaptermodul 9 druckdicht eingesetzt ist. Die Absetzeinheit 4 weist ein rohrförmiges Absetzmittel 10 am Ende der Zuleitung 3 und ein schwimmendes Absaugmittel 11 am Ende der Ableitung 6 auf. Ein Erweiterungsmodul 12 in der Ableitung 6 weist eine Pumpeinheit 13, eine Filtereinheit 14 und eine Kühleinheit 15 auf. Das Adaptermodul 9 ist schlauchanschlussseitig über die Zuleitung 3 direkt mit einem Auffangmittel 16 des Steinbearbeitungswerkzeugs 1 verbunden.

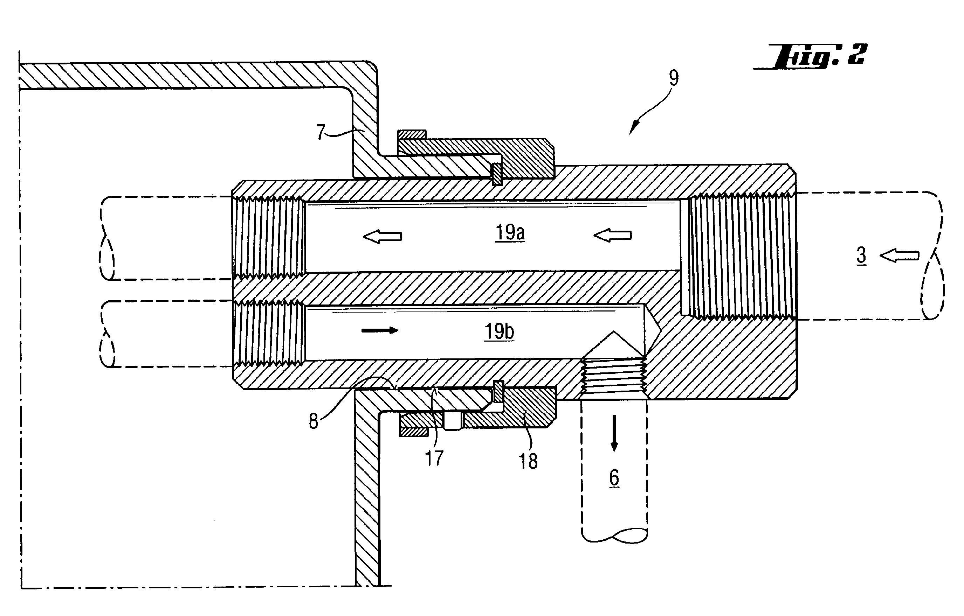

Nach Fig. 2 weist das Adaptermodul 9 mit einer Dichtfläche 17 für die Saugöffnung 8 des Nasssaugers 7 und einem Befestigungsmittel 18 zur dreharretierbaren Befestigung am handelsüblichen Flansch der Saugöffnung 8 zwei voneinander druckdicht getrennte Durchführungen 19a, 19b für die Zuleitung 3 und die Ableitung 6 auf.

## Patentansprüche

1. Spülflüssigkeitsaufbereitungsgerät (2) für eine Spülflüssigkeit mit einer Zuleitung (3), die eine Absetzeinheit (4) mit einem Steinbearbeitungswerkzeug (1) verbindet, mit einer Ableitung (6), die den Strömungskreis schliesst, sowie mit einem saugenden Fördermittel (5), wobei sowohl ein Nasssauger (7) mit dem Fördermittel (5) und mit einer Saugöffnung (8) des druckdichten Flüssigkeitsbehälters als auch ein in der Ableitung (6) angeordnetes Erweiterungsmodul (12) jeweils modular ausgebildet und separat transportabel ist, wobei die Absetzeinheit (4) im Inneren des Nasssaugers (7) ausgebildet ist und wobei die Zuleitung (3), die Absetzeinheit (4), die Ableitung (6), die Fördermittel (5), der Nasssauger (7) und das Erweiterungsmodul (12) zum Spülflüssigkeitsaufbereitungsgerät (2) gehören und das Steinbearbeitungswerkzeug (1) nicht dazu gehört,
**dadurch gekennzeichnet, dass** es ein für eine Saugöffnung (8) des Nasssaugers (7) druckdicht passend ausgebildetes Adaptermodul (9) mit einer Dichtfläche (17) aufweist, durch welches der Strömungskreis bidirektional zu und von der Absetzeinheit (4) verläuft.

2. Spülflüssigkeitsaufbereitungsgerät nach Anspruch 1, **dadurch gekennzeichnet, dass** in der Ableitung (6) der Nasssauger (7) über das Adaptermodul (9) mit dem Erweiterungsmodul (12) verbunden ist.

3. Spülflüssigkeitsaufberesungsgerät nach Anspruch 1 oder 2, **dadurch gekennzeichnet, dass** es eine Pumpeinheit (13), eine Filtereinheit (14) und/oder eine Kühleinheit (15) aufweist.

4. Spülflüssigkeitsaufbereitungsgerät nach einem der Ansprüche 1, bis 3 **dadurch gekennzeichnet, dass** das Adapter modul schtauchanschtussseitig über die Zuleitung (3) direkt mit einem Auffangmittel (16) des Steinbearbeitungswerkzeugs (1) verbindbar ist, und dass optional die Zuleitung (3) als biegsamer Druckschlauch ausgebildet ist.

5. Spülflüssigkeitsaufbereitungsgerät nach einem der Ansprüche 1 bis 4, **dadurch gekennzeichnet, dass** das Adapter modul saugeranschlussseitig am Ende der Zuleitung (3) mit einem Absetzmittel (10) verbunden ist, welches optional rohrförmig ausgebildet ist.

6. Spülflüssigkeitsaufbereitungsgerät nach einem der Ansprüche 1 bis 5, **dadurch gekennzeichnet, dass** das Adapter modul saugeranschlussseitig am Ende der Ableitung (6) mit einem Absaugmittel (11) verbunden ist, welches optional schwimmend ausgebildet ist.

7. Spülflüssigkeitsaufbereitungsgerät nach einem der Ansprüche 1 bis 6, **dadurch gekennzeichnet, dass** das Adapter modul zwei voneinander druckdicht getrennte Durchführungen (19a, 19b) aufweist.

## Claims

1. Rinsing fluid purification device (2) for a rinsing fluid with a feed pipe (3) that connects a settler (4) to a stone working tool (1), with an outlet (6) that closes a flow circuit, and with a sucking conveying means (5), whereby both a wet suction apparatus (7), with the conveying means (5) and with a suction opening (8) of the pressurized liquid vessel, and also an extension module (12) disposed in the outlet (6) are in each case in modular form and can be carried separately, whereby the settler (4) is developed inside the wet suction apparatus (7), and whereby the feed pipe (3), the settler (4), the outlet (6), the conveying means (5), the wet suction apparatus (7) and the extension module (12) are part of the rinsing fluid purification device (2) and the stone working tool (1) is not part of it, **characterized in that** it has an adapter module (9), with a sealing surface (17), fitting pressure-tight in a suction opening (8) of the wet suction apparatus (7), through which the flow circuit runs bi-3directionally to and from the settler (4).

2. Rinsing fluid purification device in accordance with claim 1, **characterized in that**, in the outlet (6), the wet suction apparatus (7) is connected to the extension module (12) by means of the adapter module (9).

3. Rinsing fluid purification device in accordance with claims 1 or 2, **characterized in that** it has a pump unit (13), a filter unit (14) and/or a cooling unit (15).

4. Rinsing fluid purification device in accordance with one of claims 1 to 3, **characterized in that** the adapter module can be directly connected, on the tube connection side, to a collection means (16) of the tool (1) for working stone, by means of the feed pipe (3), and **in that** the feed pipe (3) is optionally in the form of flexible pressure tubing.

5. Rinsing fluid purification device in accordance with one of claims 1 to 4, **characterized in that** the adapter module is connected to a settling means (10), which can be tubular in form, at the end of the feed pipe (3).

6. Rinsing fluid purification device in accordance with one of claims 1 to 5, **characterized in that** the adapter module is connected, at the end of the outlet (6), to a suction means (11) that can optionally be floating.

7. Rinsing fluid purification device in accordance with one of claims 1 to 6, **characterized in that** the adapter module has two ducts (19a, 19b) that are pressurized separately from each other.

## Revendications

1. Appareil de traitement de liquide de rinçage (2) pour un liquide de rinçage, comprenant une conduite d'entrée (3) qui relie une unité de décantation (4) à un outil de travail sur minéral (1), une conduite de sortie (6) qui ferme le circuit d'écoulement, ainsi qu'un moyen d'alimentation aspirant (5), aussi bien un aspirateur de liquides (7) muni du moyen d'alimentation (5) et de l'ouverture d'aspiration (8) du réservoir de liquide étanche à la pression qu'un module d'extension (12) implanté sur la conduite de sortie (6) étant conçus chacun de manière modulaire et étant transportables séparément, l'unité de décantation (4) étant réalisée à l'intérieur de l'aspirateur de liquides (7), et la conduite d'entrée (3), l'unité de décantation (4), la conduite de sortie (6), les moyens d'alimentation (5), l'aspirateur de liquides (7) et le module d'extension (12) faisant partie de l'appareil de traitement de liquide de rinçage (2), et l'outil de travail sur minéral (1) n'en faisant pas partie, **caractérisé en ce qu'**il comporte un module d'adaptation (9) qui est conçu pour s'adapter, de manière étanche à la pression, à l'ouverture d'aspiration (8) de l'aspirateur de liquides (7), qui comporte une surface d'étanchéité (17) et à travers lequel le circuit d'écoulement passe de manière bidirectionnelle en direction et en provenance de l'unité de décantation (4).

2. Appareil de traitement de liquide de rinçage selon la revendication 1, **caractérisé en ce que**, sur la conduite de sortie (6), l'aspirateur de liquides (7) est relié au module d'extension (12) par l'intermédiaire du module d'adaptation (9).

3. Appareil de traitement de liquide de rinçage selon la revendication 1 ou 2, **caractérisé en ce qu'**il comporte une unité de pompe (13), une unité filtrante (14) et/ou une unité de refroidissement (15).

4. Appareil de traitement de liquide de rinçage selon une des revendications 1 à 3, **caractérisé en ce que**, coté raccord de flexible, le module d'adaptation peut être raccordé directement à un moyen de récupération (16) de l'outil de travail sur minéral (1) par l'intermédiaire de la conduite d'entrée (3), et **en ce que** la conduite d'entrée (3) est optionnellement conformée en flexible sous pression.

5. Appareil de traitement de liquide de rinçage selon une des revendications 1 à 4, **caractérisé en ce que**, côté raccord d'aspirateur, le module d'adaptation est relié, à l'extrémité de la conduite d'entrée (3), à un moyen de décantation (10), lequel est optionnellement conçu sous forme tubulaire.

6. Appareil de traitement de liquide de rinçage selon une des revendications 1 à 5, **caractérisé en ce que**, côté raccord d'aspirateur, le module d'adaptation est relié, à l'extrémité de la conduite de sortie (6), à un moyen d'aspiration (11), lequel est optionnellement conçu de manière flottante.

7. Appareil de traitement de liquide de rinçage selon une des revendications 1 à 6, **caractérisé en ce que** le module d'adaptation comporte deux traversées (19a, 19b) séparées l'une de l'autre de manière étanche à la pression.
